(19) Europäisches Patentamt / European Patent Office / Office européen des brevets

(11) **EP 1 828 578 B1**

(12) **FASCICULE DE BREVET EUROPEEN**

(45) Date de publication et mention
de la délivrance du brevet:
**07.05.2008 Bulletin 2008/19**

(21) Numéro de dépôt: **05824399.9**

(22) Date de dépôt: **07.12.2005**

(51) Int Cl.:
***F02D 41/00*** *(2006.01)*

(86) Numéro de dépôt international:
**PCT/FR2005/051053**

(87) Numéro de publication internationale:
**WO 2006/064149 (22.06.2006 Gazette 2006/25)**

(54) **PROCEDE DE COMMANDE POUR MOTEUR SURALIMENTE**

VERFAHREN ZUR STEUERUNG EINER AUFGELADENEN MASCHINE

METHOD FOR CONTROLLING A SUPERCHARGED ENGINE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **15.12.2004 FR 0413326**

(43) Date de publication de la demande:
**05.09.2007 Bulletin 2007/36**

(73) Titulaire: **RENAULT S.A.S.**
**92100 Boulogne Billancourt (FR)**

(72) Inventeur: **FONTVIEILLE, Laurent**
**F-91190 Gif Sur Yvette (FR)**

(56) Documents cités:
**EP-A- 1 024 263        DE-A1- 10 320 056**
**US-A- 6 155 049        US-A1- 2003 010 019**
**US-B1- 6 397 597**

**EP 1 828 578 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne le domaine du contrôle d'un moteur.

Plus particulièrement, l'invention concerne un procédé de commande d'un moteur de véhicule et un système de réglage d'une pression de suralimentation dans un collecteur d'admission d'un moteur.

L'utilisation d'un tel procédé et d'un tel système est particulièrement intéressante dans les moteurs diesel suralimentés par un turbocompresseur.

Les véhicules automobiles, et en particulier les véhicules automobiles de type diesel, sont très souvent équipés d'un turbocompresseur de suralimentation du moteur en air, destiné à augmenter la quantité d'air admise dans les cylindres.

Ce turbocompresseur comporte généralement une turbine, placée à la sortie du collecteur d'échappement du moteur et entraînée par les gaz d'échappement.

Il comporte en outre un compresseur, par exemple monté sur le même axe que la turbine, assurant une compression de l'air qui entre dans le collecteur d'admission.

Dans ce cas, le turbocompresseur est associé à un organe de réglage de la puissance des gaz d'échappement destiné à réguler la pression régnant dans le collecteur d'admission autour d'une valeur de consigne de pression élaborée, par exemple, par apprentissage préalable, en fonction du régime du moteur et du débit du carburant.

Un tel organe de réglage peut être une soupape de décharge, ou des ailettes, dans le cas d'un turbocompresseur à géométrie variable.

Selon une variante, un échangeur peut être placé entre le compresseur et le collecteur d'admission pour refroidir l'air à la sortie du compresseur.

Par ailleurs, on équipe aujourd'hui couramment les moteurs de type Diesel d'un filtre à particules, monté sur la ligne d'échappement du moteur, de manière à minimiser la quantité de particules rejetées vers l'atmosphère (fumées noires).

Ces filtres comportent typiquement un ensemble de micro-canaux dans lesquels une grande partie des particules se trouve piégée.

Une fois le filtre plein, il est nécessaire de mettre en oeuvre une phase de régénération, consistant essentiellement à vider le filtre en brûlant les particules.

Cette régénération peut être obtenue, soit par un dispositif de chauffage prévu à cet effet, soit en prévoyant des phases de fonctionnement du moteur selon des paramètres spécifiques.

Le filtre à particules étant placé dans la ligne d'échappement après le turbocompresseur, l'introduction d'un tel dispositif engendre une élévation de pression en sortie de la turbine du turbocompresseur.

Cette élévation de pression, qui est d'autant plus importante que le filtre est chargé en particules, se traduit par une réduction du taux de détente du turbocompresseur, par une réduction de la puissance fournie par les gaz d'échappement à la turbine et par une diminution consécutive des performances du moteur.

Afin de conserver le même niveau de performances, il est nécessaire de maintenir le taux de détente sensiblement constant, ce qui conduit généralement à vouloir augmenter la pression en entrée de la turbine.

Une telle augmentation de pression est généralement obtenue en agissant sur ledit organe de réglage.

Ainsi, dans le cas où le turbocompresseur est associé à une soupape de décharge, il suffit d'agir par exemple sur la fermeture de la soupape.

Par ailleurs, une telle opération est typiquement contrôlée par une unité centrale qui va réguler la pression de suralimentation dans le collecteur en fonction de la pression mesurée en entrée de la turbine.

A cet égard, on pourra se référer notamment au document US 2003/0010019 où l'on adjoint une boucle de régulation de la pression en entrée de la turbine à une boucle de régulation de la pression de suralimentation dans le collecteur.

Ce type de régulation a rendu de nombreux services mais demeure limité.

En particulier, il souffre d'un défaut de robustesse vis-à-vis de variations de la pression en sortie de la turbine, dues par exemple aux variations de masse des suies présentes dans le filtre.

En outre, ce type de régulation ne permet pas de se prémunir d'une dégradation du turbocompresseur pouvant survenir lorsque la pression différentielle à ses bornes dépasse un niveau critique connu.

Or, ce risque de dégradation est de plus en plus fréquent étant donné la sollicitation toujours plus importante des turbocompresseurs.

En conséquence, il devient important de pouvoir contrôler précisément la pression différentielle aux bornes de la turbine.

D'autres solutions que celle du document précité ont été proposées, mais elles ne constituent que des alternatives peu efficaces à résoudre en particulier les problèmes évoqués.

Un but de l'invention est d'améliorer la commande d'un moteur.

A cet effet, on prévoit selon l'invention un procédé de commande d'un moteur de véhicule, caractérisé en ce qu'il comporte une étape de mesure d'une pression $P4_m$ régnant à la sortie d'une turbine d'un turbocompresseur, de sorte à effectuer un réglage d'une pression de suralimentation $P2_m$ dans un collecteur d'admission du moteur.

Des aspects préférés mais non limitatifs du procédé selon l'invention sont les suivants :

- une étape de fourniture d'un signal de commande pour contrôler un organe de modulation de la puissance des gaz d'échappement, la valeur dudit signal dépendant notamment de la pression $P4_m$ régnant à la sortie de la turbine ;
- la fourniture du signal est effectuée au moyen d'une boucle de régulation comprenant deux régulateurs en cascade, le premier régulateur minimisant un premier écart $\varepsilon1$ entre une mesure $P2_m$ et une consigne $P2_{cons}$ de la pression de suralimentation et le deuxième régulateur minimisant un deuxième écart $\varepsilon2$ entre une variable $V_m$ dépendant de la pression $P4_m$ régnant à la sortie de la turbine et la somme du premier écart obtenu $\varepsilon1$ à une consigne $V_{cons}$ associée à la variable $V_m$;
- l'un des deux régulateurs, au moins, met en oeuvre un processus de logique floue;
- la variable $V_m$ correspond à une pression différentielle $P3/4_m$ aux bornes de la turbine ;
- on détermine la pression différentielle $P_{3/4m}$ aux bornes de la turbine à partir de l'équation :

$$P3/4_m = P3_m - P4_m$$

où $P3_m$ est une mesure de la pression régnant à l'entrée de la turbine ;

- le véhicule comporte en outre un circuit de re-circulation des gaz d'échappement EGR et en ce que l'on détermine la pression différentielle $P_{3/4m}$ aux bornes de la turbine à partir de l'équation :

$$P3/4_m = P2_m + P3/2_m - P4_m$$

- où $P_{3/2m}$ est la pression différentielle mesurée entre l'entrée et la sortie du circuit de re-circulation des gaz d'échappement EGR, à savoir la différence entre les pressions $P3_m$ et $P2_m$ ;
- la variable $V_m$ correspond à un taux de détente $PiT_m$ dans la turbine ;
- on détermine le taux de détente $PiT_m$ à partir de la formule :

$$PiT_m = \frac{P3_m}{P4_m}$$

- on détermine le taux de détente $PiT_m$ à partir de la formule :

$$PiT_m = \frac{P2_m + P3/2_m}{P4_m}$$

On fournit également selon l'invention un système de réglage d'une pression de suralimentation dans un collecteur d'admission d'un moteur équipé notamment :

- d'un turbo compresseur muni d'une turbine,
- d'au moins un capteur de pression, et
- de moyens de commande,

caractérisé en ce qu'au moins l'un des capteurs de pression est apte à mesurer une pression $P4_m$ régnant à la sortie de la turbine de sorte à effectuer un réglage d'une pression de suralimentation $P2_m$ dans le collecteur d'admission du moteur.

D'autres aspects, buts et avantages de l'invention apparaîtront mieux à la lecture de la description suivante de l'invention, faite en référence aux dessins annexés sur lesquels :

- la figure 1 montre schématiquement un moteur comportant un système de réglage conforme à la présente invention,
- la figure 2 représente une structure de régulation selon un mode de réalisation de l'invention qui consiste à réguler en fonction de la pression différentielle aux bornes de la turbine du turbocompresseur,
- la figure 3 représente une composition d'un régulateur à logique floue selon l'invention,
- la figure 4 montre schématiquement un élément de logique floue utilisé dans le régulateur à logique floue,
- la figure 5 illustre une élaboration possible d'un signal de consigne $P2_{cons}$ de la pression de suralimentation dans le collecteur d'admission,
- la figure 6 illustre une élaboration possible d'un signal de consigne $P_{3/4cons}$ de la pression différentielle aux bornes de la turbine.

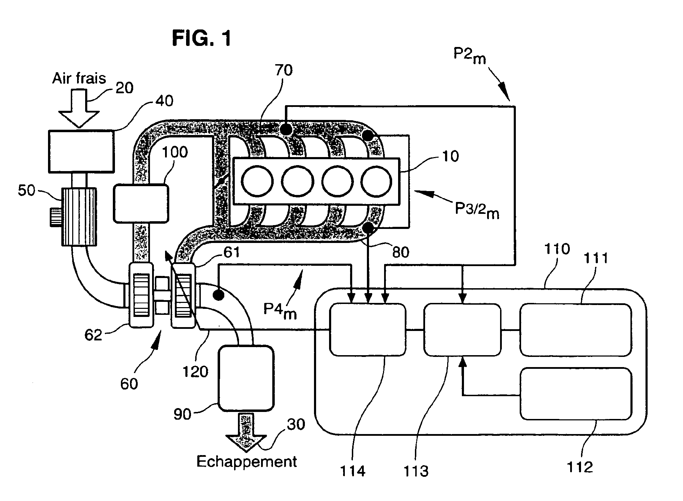

La figure 1 montre un mode de réalisation préféré de l'invention, à savoir un moteur 10 à combustion interne d'un véhicule automobile, de type diesel, alimenté en air frais par une entrée 20 et qui rejette les gaz brûlés par un échappement 30.

Le circuit d'admission d'air frais dans le moteur 10 comporte essentiellement un filtre à air 40 et un débitmètre d'air 50 alimentant, par l'intermédiaire d'un turbocompresseur 60 et de conduites appropriées, le collecteur d'admission 70 du moteur 10.

Un collecteur d'échappement 80 récupère les gaz d'échappement issus de la combustion et évacue ces derniers vers l'extérieur, par l'intermédiaire du turbocompresseur 60 et d'un filtre à particules 90 destiné à réduire la quantité de particules, notamment de suies, rejetées dans l'environnement.

Pour ce qui concerne le turbocompresseur 60, il comporte essentiellement une turbine 61 entraînée par les gaz d'échappement et un compresseur 62 monté sur le même axe que la turbine 61 et assurant une compression de l'air distribué par le filtre à air 40, dans le but d'augmenter la quantité d'air admise dans les cylindres du moteur via un circuit EGR de re-circulation des gaz d'échappement.

Selon l'invention, une unité centrale 110 récupère par l'intermédiaire de capteurs appropriés des signaux de mesure de pression ou de différence de pression.

Par exemple, elle récupère la pression de suralimentation $P2_m$ dans le collecteur d'admission 70, la pression en entrée $P3_m$ de la turbine 61 et avantageusement la pression $P4_m$ en sortie de celle-ci.

Comme nous le verrons, elle peut également récupérer la pression différentielle aux bornes du circuit EGR, c'est-à-dire entre le collecteur d'admission 70 et l'entrée de la turbine 61.

Ces mesures ainsi que des consignes correspondantes 111 et 112 sont fournies en entrée d'une structure cascade de régulation que comprend l'unité centrale 110.

On rappelle ici qu'une telle structure comporte par exemple deux régulateurs 113, 114 en série.

Le premier régulateur 113 permet de réguler la pression de suralimentation dans le collecteur d'admission 70.

Et selon l'invention, le deuxième régulateur 114 permet de réguler la même pression en fonction d'une pression $P4_m$ en sortie de la turbine 61.

Plus précisément, la régulation dépend d'une variable $V_m$ fonction de la pression $P4_m$.

En sortie de l'unité centrale 110 un signal de commande 120 vient contrôler ledit organe.

La variable $V_m$ peut s'exprimer sous deux formes différentes que l'unité centrale 110 est à même de choisir de manière autonome ou qu'une personne a pu configurer préalablement.

La première forme de la variable $V_m$ correspond à une pression différentielle $P3/4_m$ aux bornes de la turbine 61, tandis que la deuxième forme correspond à un taux de détente $PiT_m$ dans cette dernière.

Pour ce qui concerne la première forme, et qui correspond à un premier mode de réalisation de l'invention, on envisage de déterminer ladite pression différentielle $P3/4_m$ selon plusieurs variantes possibles.

La première variante, consiste à mesurer directement cette différence de pression à l'aide du capteur différentiel évoqué plus haut.

Dans la deuxième variante, on détermine cette pression différentielle $P3/4_m$ en effectuant la différence entre la mesure en entrée $P3_m$ et en sortie $P4_m$ de la turbine 61.

La troisième variante, préférée de l'invention, consiste à déterminer cette pression différentielle $P3/4_m$ à l'aide de la relation suivante :

$$P3/4_m = P2_m + P3/2_m - P4_m$$

où $P3/2_m$ est la pression différentielle aux bornes du circuit EGR.

La pression différentielle $P3/2_m$ pourra être directement mesurée (capteur différentiel) ou encore déduite de deux mesures distinctes des pressions $P2_m$ et $P3_m$.

Pour ce qui concerne la deuxième forme de la variable $V_m$, et qui correspond à un deuxième mode de réalisation de l'invention, on dispose également de plusieurs variantes possibles.

Comme précédemment, la première variante consiste à mesurer directement le taux de détente $PiT_m$.

Dans la deuxième variante, on détermine le taux de détente $PiT_m$ à partir de la mesure des pressions $P3_m$ et $P4_m$, puis on effectue le rapport entre ces deux pressions :

$$PiT_m = \frac{P3_m}{P4_m}$$

Finalement, la troisième variante, préférée de l'invention, consiste à déterminer ce taux de détente $PiT_m$ à l'aide de la relation suivante :

$$PiTm = \frac{P2m + P3/2m}{P4m}$$

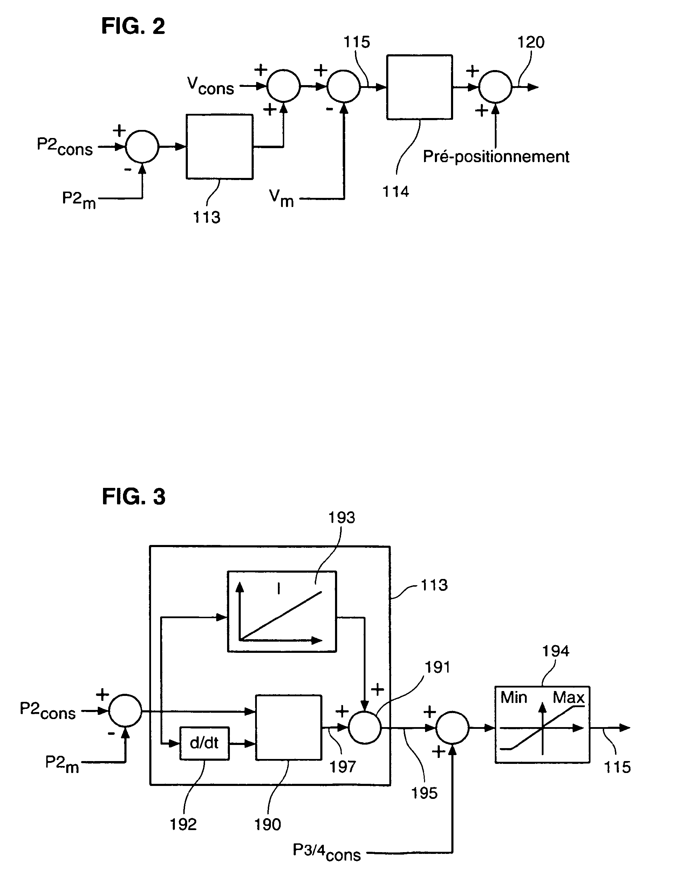

En se référant à la figure 2, on va maintenant décrire plus en détails l'unité centrale comportant la cascade de régulateur précitée.

Comme cela est représenté sur cette figure, le régulateur 113 reçoit en entrée l'écart entre une consigne $P2_{cons}$ et la mesure $P2_m$ de la pression de suralimentation.

La sortie du régulateur 113 est ensuite ajoutée à une consigne $V_{cons}$ associée à la variable mesurée $V_m$, puis l'écart 115 entre le résultat obtenu et la variable $V_m$ est fournie à l'entrée du deuxième régulateur 114.

Bien entendu, le lecteur comprendra que les signaux $V_m$ et $V_{cons}$ doivent être adaptés selon la forme de la variable choisie.

A titre d'exemple, si le choix s'est porté sur une régulation en fonction de la pression différentielle $P3/4_m$ et non du taux de détente $PiT_m$, les variables $V_{cons}$ et $V_m$ correspondent respectivement à $P3/4_{cons}$ et $P3/4_m$ et le régulateur 114 régule la pression différentielle aux bornes de la turbine 61.

Finalement, la sortie du deuxième régulateur 114 est ajoutée à une valeur de pré-positionnement de l'organe de sorte à fournir à ce dernier un signal de commande 120 pour agir sur la pression des gaz d'échappement du moteur.

Classiquement, la valeur de pré-positionnement se présente sous la forme d'une cartographie, par exemple en régime moteur et débit carburant.

A cet égard, le lecteur pourra se référer à de nombreux documents pour obtenir plus de détails sur les techniques d'élaboration et d'utilisation de telles cartes.

Ainsi, lorsque la variable $V_m$ correspond à la pression différentielle $P3/4_m$ aux bornes de la turbine 61, le régulateur de suralimentation 113 minimise l'écart entre la consigne $P2_{cons}$ et la mesure $P2_m$ de la pression de suralimentation en venant corriger la consigne $P3/4_{cons}$ de la pression différentielle aux bornes de la turbine 61.

Puis, le régulateur 114 minimise l'écart entre le résultat ci-dessus et la mesure de la pression différentielle $P3/4_m$ en modifiant le positionnement de l'organe par rapport à son état initial (cet état initial était déterminé par les valeurs de pré-positionnement).

Par analogie, dans le cas où la variable $V_m$ correspond au taux de détente $PiT_m$, le régulateur de suralimentation 113 minimise l'écart entre la consigne $P2_{cons}$ et la mesure $P2_m$ de la pression de suralimentation en venant corriger la consigne $PiT_{cons}$ du taux de détente dans la turbine 61.

Et cette fois-ci, le régulateur 114 minimise l'écart entre le résultat ci-dessus et la mesure $PiT_m$ du taux de détente dans la turbine 61 en modifiant le positionnement de l'organe par rapport à son état initial.

Dans un souci de clarté, la description suivante est relative à la régulation de la pression de suralimentation dans le collecteur d'admission en fonction de la pression différentielle $P3/4_m$ aux bornes de la turbine 61, étant entendu que les adaptations nécessaires à la réalisation d'une régulation en fonction du taux de détente $PiT_m$ sont à la portée de l'homme du métier pour autant qu'il est pris connaissance de ce document.

Sur la figure 3, nous avons représenté schématiquement un exemple de composition d'un régulateur utilisé dans l'invention.

L'exemple choisi concerne un régulateur du type à logique floue, cependant l'invention n'est nullement limitée à ce type-ci.

En outre, seul la composition du régulateur 113 se trouve représentée sur cette figure, étant entendu que celle du régulateur 114 peut être essentiellement identique.

Le régulateur 113 à logique floue comporte une boucle de régulation qui comprend essentiellement un élément de logique floue 190, un additionneur 191, un élément de calcul de terme dérivée 192 et un élément de calcul de terme intégral 193.

On notera ici que, de manière évidente l'élément de logique floue 190 peut être remplacé par un élément du type proportionnel-intégral-dérivé (PID).

Cependant, l'utilisation de cet élément de logique floue 190 permet avantageusement de supprimer les parties proportionnelle et dérivée d'un élément du type proportionnel-intégral-dérivé (PID) tout en conservant la partie intégrale.

La sortie 195 du régulateur 113 est ajoutée à la consigne P3/4$_{cons}$ de pression différentielle aux bornes de la turbine 61 et le signal ainsi constitué est alors limité par un circuit de seuillage 194.

Ainsi, comme on peut le voir, ladite consigne P3/4$_{cons}$ joue ici un rôle de pré-positionnement pour le régulateur 113.

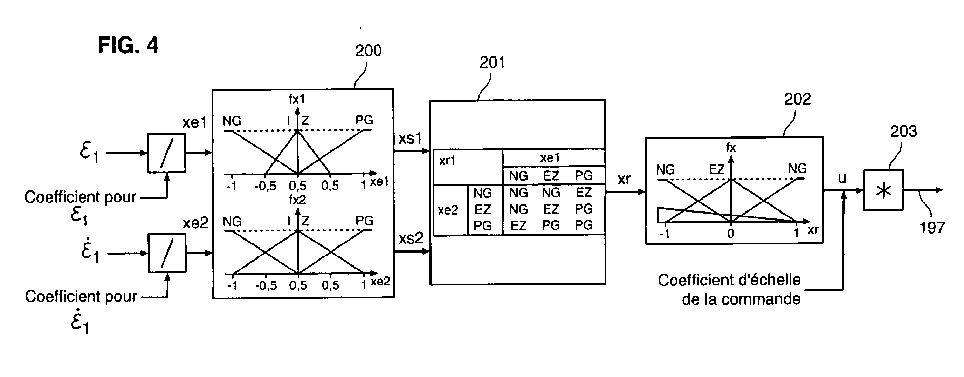

Pour ce qui concerne l'élément de logique floue 190, il comprend une succession d'éléments tels un étage 200 de partage des tâches (fuzzification), un étage 201 de calcul d'inférences, un étage 202 de départage des taches (défuzzification), puis un étage 203 d'arbitrage (voir figure 4).

Un tel type d'élément est connu de l'homme de l'art.

Nous laissons donc au lecteur le soin de se reporter par exemple au document EP 1365 132 s'il souhaite obtenir des détails sur son fonctionnement.

Cependant, nous noterons ici que, selon l'invention, l'étage 200 de partage des taches reçoit à ses entrées l'écart $\varepsilon 1$ entre la mesure P2$_m$ et la consigne P2$_{cons}$ de la pression de suralimentation dans le collecteur 70, l'écart $\varepsilon 2$ (non représenté sur la figure 3) entre la mesure P3$_m$ et la consigne P3$_{cons}$ de la pression en entrée de la turbine, et les dérivées ($\varepsilon_1, \varepsilon_2$) de ces écarts ($\varepsilon_2$ n'est pas représenté sur la figure).

Plus précisément, ce sont les valeurs mises à l'échelle (par exemple xe1 pour $\varepsilon 1$ et xe2 pour $\varepsilon_1$) qui sont fournies à l'entrée de l'élément 200 de partage des taches.

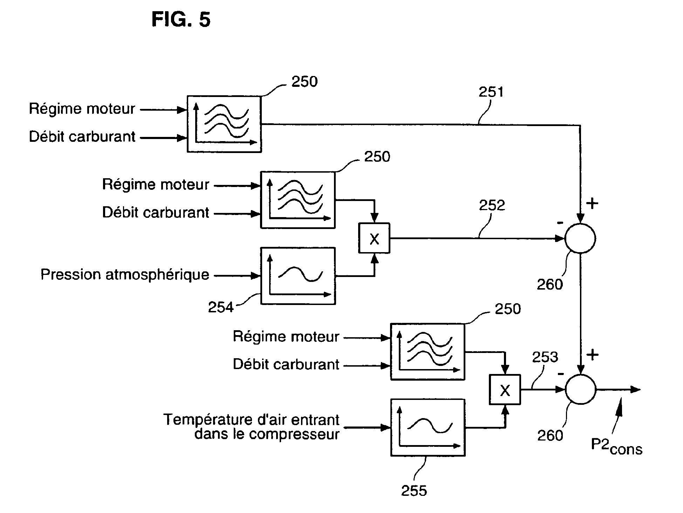

La figure 5 illustre l'élaboration du signal de consigne P2$_{cons}$ de suralimentation dans le collecteur 70, celui-ci étant notamment utilisé pour déterminer l'écart de pression différentielle qui fait office d'entrée au régulateur 113 (voir notamment la figure 2).

Sur cette figure, une première valeur 251 de consigne P2$_{cons}$ de pression de suralimentation est générée au moyen d'une cartographie 250 en régime moteur et débit carburant.

Cette valeur 251 correspond à la consigne P2$_{cons}$ de pression de suralimentation sans apport de correction.

Cette première valeur 251 subit ensuite une double correction 252 et 253 en fonction par exemple de la pression atmosphérique et de la température d'air entrant dans le compresseur au moyen d'une cartographie appropriée 254 et 255 respectivement.

Bien entendu l'invention n'est nullement limitée à un tel exemple.

La double correction permet de diminuer la consigne de pression de suralimentation P2$_{cons}$ au moyen de deux soustracteurs 260, ce qui limite avantageusement le régime du turbocompresseur en fonction de l'altitude et de la température ambiante.

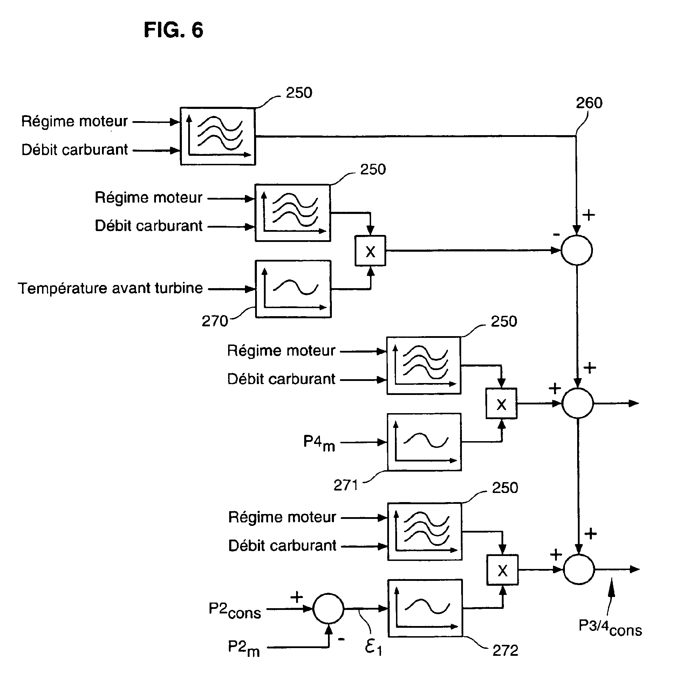

La figure 6 illustre l'élaboration du signal de consigne P3/4$_{cons}$ de pression différentielle aux bornes de la turbine 61.

Une première valeur 260 de consigne P3/4$_{cons}$ de pression de suralimentation est générée au moyen d'une cartographie 250 en régime moteur et débit carburant.

A l'aide de cartographies appropriées 270, 271, 272, la première valeur 260 est ensuite corrigée en fonction de la pression P4$_m$ et de la température en sortie de turbine 61 et de l'écart $\varepsilon 1$ entre la mesure P2$_m$ et la consigne P2$_{cons}$ de la pression de suralimentation dans le collecteur 70.

Ainsi, la correction en fonction de la pression P4$_m$ en sortie de turbine 61 permet avantageusement de prendre en compte l'impact de l'augmentation de la masse de suies dans le filtre à particules 90.

Comme évoqué précédemment, le régulateur 114 de la pression différentielle aux bornes de la turbine 61 comporte essentiellement les mêmes éléments que celui de la pression de suralimentation P2$_m$ dans le collecteur d'admission 70 ci-dessus présenté.

Bien entendu, on pourra apporter de nombreuses modifications sans sortir du cadre de la présente invention.


**Revendications**

1. Procédé de commande d'un moteur (10) de véhicule, **caractérisé en ce qu'**il comporte une étape de mesure d'une pression P4$_m$ régnant à la sortie d'une turbine (61) d'un turbocompresseur (60), de façon à effectuer un réglage d'une pression de suralimentation P2$_m$ dans un collecteur d'admission du moteur.

**2.** Procédé selon la revendication 1, **caractérisé en ce qu'**il comporte une étape de fourniture d'un signal de commande (120) pour contrôler un organe de modulation de la puissance des gaz d'échappement, la valeur dudit signal dépendant notamment de la pression $P4_m$ régnant à la sortie de la turbine (61).

**3.** Procédé selon la revendication 2, **caractérisé en ce que** la fourniture du signal (120) est effectuée au moyen d'une boucle de régulation comprenant deux régulateurs en cascade, le premier régulateur (113) minimisant un premier écart $\varepsilon 1$ entre une mesure $P2_m$ et une consigne $P2_{cons}$ de la pression de suralimentation et le deuxième régulateur (114) minimisant un deuxième écart $\varepsilon 2$ entre une variable $V_m$ dépendant de la pression $P4_m$ régnant à la sortie de la turbine (61) et la somme du premier écart obtenu $\varepsilon 1$ à une consigne $V_{cons}$ associée à la variable $V_m$.

**4.** Procédé selon la revendication 3, **caractérisé en ce que** l'un des deux régulateurs (113, 114), au moins, met en oeuvre un processus de logique floue.

**5.** Procédé selon l'une des revendications précédentes, **caractérisé en ce que** la variable $V_m$ correspond à une pression différentielle $P3/4_m$ aux bornes de la turbine (61).

**6.** Procédé selon la revendication 5, **caractérisé en ce qu'**on détermine la pression différentielle $P3/4_m$ aux bornes de la turbine (61) à partir de l'équation :

$$P3/4_m = P3_m - P4_m$$

où $P3_m$ est une mesure de la pression régnant à l'entrée de la turbine (61).

**7.** Procédé selon la revendication 5, **caractérisé en ce que** le véhicule comporte en outre un circuit de re-circulation des gaz d'échappement EGR et **en ce que** l'on détermine la pression différentielle $P3/4_m$ aux bornes de la turbine (61) à partir de l'équation :

$$P3/4_m = P2_m + P3/2_m - P4_m$$

où $P3/2_m$ est la pression différentielle mesurée entre l'entrée et la sortie du circuit de re-circulation des gaz d'échappement EGR, à savoir la différence entre les pressions $P3_m$ et $P2_m$.

**8.** Procédé selon l'une des revendications 1 à 4, **caractérisé en ce que** la variable $V_m$ correspond à un taux de détente $PiT_m$ dans la turbine.

**9.** Procédé selon la revendication 8, **caractérisé en ce qu'**on détermine le taux de détente $PiT_m$ à partir de la formule :

$$PiT_m = \frac{P3_m}{P4_m}$$

**10.** Procédé selon la revendication 8, **caractérisé en ce qu'**on détermine le taux de détente $PiT_m$ à partir de la formule :

$$PiT_m = \frac{P2_m + P3/2_m}{P4_m}$$

**11.** Système de réglage d'une pression de suralimentation dans un collecteur d'admission (70) d'un moteur (10) équipé notamment :

- d'un turbo compresseur (60) muni d'une turbine (61),

- d'au moins un capteur de pression, et
- de moyens de commande,

**caractérisé en ce qu'**au moins l'un des capteurs de pression est apte à mesurer une pression $P4_m$ régnant à la sortie de la turbine (61) de sorte à effectuer un réglage d'une pression de suralimentation $P2_m$ dans le collecteur d'admission (70) du moteur.

12. Système de réglage selon la revendication 11, **caractérisé en ce que** l'élément comporte une boucle de régulation comprenant deux régulateurs en cascade, le premier régulateur (113) minimisant un premier écart $\varepsilon1$ entre une mesure $P2_m$ et une consigne $P2_{cons}$ de la pression de suralimentation $P2_m$ et le deuxième régulateur (114) minimisant un deuxième écart $\varepsilon2$ entre une variable $V_m$ dépendant de la pression $P4_m$ régnant à la sortie de la turbine (61) et la somme du premier écart obtenu $\varepsilon1$ à une consigne $V_{cons}$ associée à la variable $V_m$.

13. Système de réglage selon la revendication 12, **caractérisé en ce que** l'un des deux régulateurs (113, 114), au moins, est un élément de logique floue (190).

**Claims**

1. Method for controlling a vehicle engine (10), **characterized in that** it comprises a step of measuring a pressure $P4_m$ on the outlet side of a turbine (61) of a turbocharger (60) so as to regulate a boost pressure $P2_m$ in an inlet manifold of the engine.

2. Method according to Claim 1, **characterized in that** it comprises a step of supplying a control signal (120) in order to control a member that modifies the power of the exhaust gases, the value of said signal being dependent in particular on the pressure $P4_m$ on the outlet side of the turbine (61).

3. Method according to Claim 2, **characterized in that** the supply of the signal (120) is carried out by means of a control loop comprising two regulators in cascade, the first regulator (113) minimizing a first difference $\varepsilon1$ between a measured value $P2_m$ and a set-point value $P2_{cons}$ of the boost pressure and the second regulator (114) minimizing a second difference $\varepsilon2$ between a variable $V_m$ dependent on the pressure $P4_m$ on the outlet side of the turbine (61) and the sum of the first difference $\varepsilon1$ obtained at a set-point value $V_{cons}$ associated with the variable $V_m$.

4. Method according to Claim 3, **characterized in that** one of the two regulators (113, 114) at least uses a process of fuzzy logic.

5. Method according to one of the preceding claims, **characterized in that** the variable $V_m$ corresponds to a differential pressure $P3/4_m$ across the turbine (61).

6. Method according to Claim 5, **characterized in that** the differential pressure $P3/4_m$ across the turbine (61) is calculated using the equation:

$$P3/4_m \ = \ P3_m \ - \ P4_m$$

where $P3_m$ is a measured value of the pressure on the inlet side of the turbine (61).

7. Method according to Claim 5, **characterized in that** the vehicle further comprises an exhaust gas recirculation circuit EGR and **in that** the differential pressure $P3/4_m$ across the turbine (61) is determined using the equation:

$$P3/4_m \ = \ P2_m \ + \ P3/2_m \ - \ P4_m$$

where $P3/2_m$ is the differential pressure measured between the inlet and the outlet of the exhaust gas recirculation circuit EGR, namely the difference between the pressures $P3_m$ and $P2_m$.

**8.** Method according to one of Claims 1 to 4, **characterized in that** the variable $V_m$ corresponds to an expansion ratio $PiT_m$ in the turbine.

**9.** Method according to Claim 8, **characterized in that** the expansion ratio $PiT_m$ is determined using the formula:

$$PiT_m = \frac{P3_m}{P4_m}$$

**10.** Method according to Claim 8, **characterized in that** the expansion ratio $PiT_m$ is determined using the formula:

$$PiT_m = \frac{P2_m + P3/2_m}{P4_m}$$

**11.** System for regulating a boost pressure in an inlet manifold (70) of an engine (10) equipped in particular:

- with a turbocharger (60) equipped with a turbine (61),
- with at least one pressure sensor, and
- with control means,

**characterized in that** at least one of the pressure sensors is able to measure a pressure $P4_m$ on the outlet side of the turbine (61) so as to regulate a boost pressure $P2_m$ in the inlet manifold (70) of the engine.

**12.** Regulating system according to Claim 11, **characterized in that** the element comprises a control loop comprising two regulators in cascade, the first regulator (113) minimizing a first difference $\varepsilon1$ between a measured value $P2_m$ and a set-point value $P2_{cons}$ of the boost pressure $P2_m$ and the second regulator (114) minimizing a second difference $\varepsilon2$ between a variable $V_m$ dependent on the pressure $P4_m$ on the outlet side of the turbine (61) and the sum of the first difference $\varepsilon1$ obtained at a set-point value $V_{cons}$ associated with the variable $V_m$.

**13.** Regulating system according to Claim 12, **characterized in that** one of the two regulators (113, 114) at least is a fuzzy logic element (190).

**Patentansprüche**

**1.** Verfahren zur Steuerung eines Fahrzeugmotors (10), **dadurch gekennzeichnet, dass** es einen Schritt der Messung eines Drucks $P4_m$ aufweist, der am Ausgang einer Turbine (61) eines Turboladers (60) herrscht, um eine Regelung eines Ladedrucks $P2_m$ in einem Ansaugkrümmer des Motors durchzuführen.

**2.** Verfahren nach Anspruch 1, **dadurch gekennzeichnet, dass** es einen Schritt des Lieferns eines Steuersignals (120) aufweist, um ein Organ zur Modulation der Abgasleistung zu steuern, wobei der Wert des Signals insbesondere von dem am Ausgang der Turbine (61) herrschenden Druck $P4_m$ abhängt.

**3.** Verfahren nach Anspruch 2, **dadurch gekennzeichnet, dass** das Liefern des Signals (120) mittels einer Regelschleife erfolgt, die zwei in Kaskade geschaltete Regler aufweist, wobei der erste Regler (113) eine erste Abweichung $\varepsilon1$ zwischen einem Messwert $P2_m$ und einem Sollwert $P2_{cons}$ des Ladedrucks minimiert, und der zweite Regler (114) eine zweite Abweichung $\varepsilon2$ zwischen einer Variablen $V_m$, die von dem am Ausgang der Turbine (61) herrschenden Druck $P4_m$ abhängt, und der Summe aus der ersten erhaltenen Abweichung $\varepsilon1$ mit einem Sollwert $V_{cons}$ minimiert, der der Variablen $V_m$ zugeordnet ist.

**4.** Verfahren nach Anspruch 3, **dadurch gekennzeichnet, dass** mindestens einer der zwei Regler (113, 114) ein Fuzzy-Logik-Verfahren durchführt.

**5.** Verfahren nach einem der vorhergehenden Ansprüche, **dadurch gekennzeichnet, dass** die Variable $V_m$ einem

Differenzdruck P3/4$_m$ an den Anschlüssen der Turbine (61) entspricht.

**6.** Verfahren nach Anspruch 5, **dadurch gekennzeichnet, dass** der Differenzdruck P3/4$_m$ an den Anschlüssen der Turbine (61) ausgehend von der Gleichung:

$$P3/4_m \ = \ P3_m \ - \ P4_m$$

bestimmt wird, wobei P3$_m$ ein Messwert des Drucks ist, der am Eingang der Turbine (61) herrscht.

**7.** Verfahren nach Anspruch 5, **dadurch gekennzeichnet, dass** das Fahrzeug außerdem einen Abgasrückführungskreislauf EGR aufweist, und dass der Differenzdruck P3/4$_m$ an den Anschlüssen der Turbine (61) ausgehend von der Gleichung:

$$P3/4_m \ = \ P2_m \ + \ P3/2_m \ - \ P4_m$$

bestimmt wird, wobei P3/2$_m$ der Differenzdruck ist, der zwischen dem Eingang und dem Ausgang des Abgasrückführungskreislaufs EGR gemessen wird, nämlich die Differenz zwischen den Drücken P3$_m$ und P2$_m$.

**8.** Verfahren nach einem der Ansprüche 1 bis 4, **dadurch gekennzeichnet, dass** die Variable V$_m$ einem Entspannungsgrad PiT$_m$ in der Turbine entspricht.

**9.** Verfahren nach Anspruch 8, **dadurch gekennzeichnet, dass** der Entspannungsgrad PiT$_m$ ausgehend von der folgenden Formel bestimmt wird:

$$PiT_m = \frac{P3_m}{P4_m}$$

**10.** Verfahren nach Anspruch 8, **dadurch gekennzeichnet, dass** der Entspannungsgrad PiT$_m$ ausgehend von der folgenden Formel bestimmt wird:

$$PiT_m = \frac{P2_m + P3/2_m}{P4_m}$$

**11.** System zur Regelung eines Ladedrucks in einem Ansaugkrümmer (70) eines Motors (10), das insbesondere ausgestattet ist mit:

- einem Turbolader (60), der mit einer Turbine (61) versehen ist,
- mindestens einem Druckmessfühler, und
- Steuermitteln,

**dadurch gekennzeichnet, dass** mindestens einer der Druckmessfühler in der Lage ist, einen Druck P4$_m$ zu messen, der am Ausgang der Turbine (61) herrscht, um eine Regelung eines Ladedrucks P2$_m$ im Ansaugkrümmer (70) des Motors durchzuführen.

**12.** Regelungssystem nach Anspruch 11, **dadurch gekennzeichnet, dass** das Element eine Regelschleife aufweist, die zwei in Kaskade geschaltete Regler aufweist, wobei der erste Regler (113) eine erste Abweichung ε1 zwischen einem Messwert P2$_m$ und einem Sollwert P2$_{cons}$ des Ladedrucks P2$_m$ minimiert, und der zweite Regler (114) eine zweite Abweichung ε2 zwischen einer Variablen V$_m$, die von dem am Ausgang der Turbine (61) herrschenden Druck

P4$_m$ abhängt, und der Summe der ersten erhaltenen Abweichung ε1 mit einem Sollwert V$_{cons}$ minimiert, der der variablen V$_m$ zugeordnet ist.

13. Regelungssystem nach Anspruch 12, **dadurch gekennzeichnet, dass** mindestens einer der zwei Regler (113, 114) ein Fuzzy-Logik-Element (190) ist.

EP 1 828 578 B1

# FIG. 1

## FIG. 2

## FIG. 3

**FIG. 4**

EP 1 828 578 B1

**FIG. 5**

Régime moteur ——→ 〔250〕

Débit carburant ——→

251

Régime moteur ——→ 〔250〕

Débit carburant ——→ X 252

Pression atmosphérique ——→ 〔254〕

+ − 260

Régime moteur ——→ 〔250〕

Débit carburant ——→ X 253

Température d'air entrant dans le compresseur ——→ 〔255〕

+ − 260 P2$_{cons}$

# FIG. 6

Régime moteur ⟶ | 250 |

Débit carburant ⟶

260

Régime moteur ⟶ | 250 |

Débit carburant ⟶

Température avant turbine ⟶

270

Régime moteur ⟶ | 250 |

Débit carburant ⟶

$P4_m$ ⟶

271

Régime moteur ⟶ | 250 |

Débit carburant ⟶

$P2_{cons}$ +

$P2_m$ -

$\varepsilon_1$

272

$P3/4_{cons}$

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

*   US 20030010019 A

*   EP 1365132 A